# EUROPÄISCHE PATENTSCHRIFT

(11) **EP 1 960 653 B1**
(45) Veröffentlichungstag und Bekanntmachung des Hinweises auf die Patenterteilung: **01.12.2010**
(21) Anmeldenummer: 06753193.9
(22) Anmeldetag: 07.06.2006
(51) Int. Cl.: F02F 3/00

(54) **ZWEITEILIGER KOLBEN FÜR EINEN VERBRENNUNGSMOTOR**
TWO-PIECE PISTON FOR AN INTERNAL COMBUSTION ENGINE
PISTON EN DEUX PIECES POUR MOTEUR A COMBUSTION INTERNE

(30) Priorität: 17.12.2005 DE 102005060548
(43) Veröffentlichungstag der Anmeldung: 27.08.2008
(73) Patentinhaber: Mahle International GmbH, 70376 Stuttgart (DE)
(72) Erfinder: SCHARP, Rainer, 71665 Vaihingen (DE)
(74) Vertreter: Pohle, Reinhard
(86) Internationale Anmeldenummer: PCT/DE2006/000877
(87) Internationale Veröffentlichungsnummer: WO 2007/068222

(56) Entgegenhaltungen:
- EP-A- 0 604 223
- DE-B- 1 253 514
- US-A- 4 577 595
- PATENT ABSTRACTS OF JAPAN Bd. 013, Nr. 365 (M-859), 15. August 1989 (1989-08-15) & JP 01 121552 A (NGK INSULATORS LTD), 15. Mai 1989 (1989-05-15)

## Beschreibung

Die Erfindung betrifft einen zweiteiligen Kolben für einen Verbrennungsmotor nach dem Oberbegriff des Anspruches 1.

Aus der Europäischen Patentanmeldung mit der Nummer 0 604 223 A1 ist ein zweiteiliger Kolben bekannt, der aus einem Oberteil und einem Unterteil besteht, wobei auf der kolbenbodenabgewandten Unterseite des Oberteils ein Bolzen mit einem Außengewinde angebracht ist, über den das Oberteil und das Unterteil miteinander verschraubt sind. Hierbei wird auf die Schraubverbindung lediglich dadurch eine geringe Vorspannung ausgeübt, dass der Bolzen eine relativ große Länge und damit eine gewisse Elastizität aufweist. Nachteilig ist hierbei der Platzbedarf des Bolzens der eine Verringerung der Kompressionshöhe des Kolbens verbietet.

Der Oberbegriff des Hauptanspruches ist aus DE 12 53 514 B bekannt.

Aufgabe der vorliegenden Erfindung ist es, den genannten Nachteil des Standes der Technik zu vermeiden und dennoch eine feste Schraubverbindung zwischen dem Oberteil und dem Unterteil eines zweiteiligen Kolbens zu schaffen.

Gelöst wird die Aufgabe mit den im Kennzeichen des Hauptanspruches stehenden Merkmalen. Zweckmäßige Ausgestaltungen der Erfindung sind Gegenstand der Unteransprüche.

Die Erfindung wird im Folgenden anhand der Zeichnungen beschrieben. Es zeigen
- Fig. 1: ein Schnittbild eines zweiteiligen Kolbens, dessen Oberteil und dessen Unterteil mittels einer Mutter mit angeformter Stauchhülse miteinander ver- schraubt sind,
- Fig. 2: eine Unteransicht des Kolbens gemäß der Erfindung,
- Fig. 3: eine Ausgestaltung der erfindungsgemäßen Verschraubung, wobei zwischen der Stauchhülse und einem an der Stauchhülse angeformten Kragen eine Unterlegscheibe angeordnet ist, und
- Fig. 4: Ausgestaltungen der Stauchhülse und des Kragens, wonach deren Kontaktflächen in Richtung Kolbenboden konisch zulaufend ausgebildet sind.

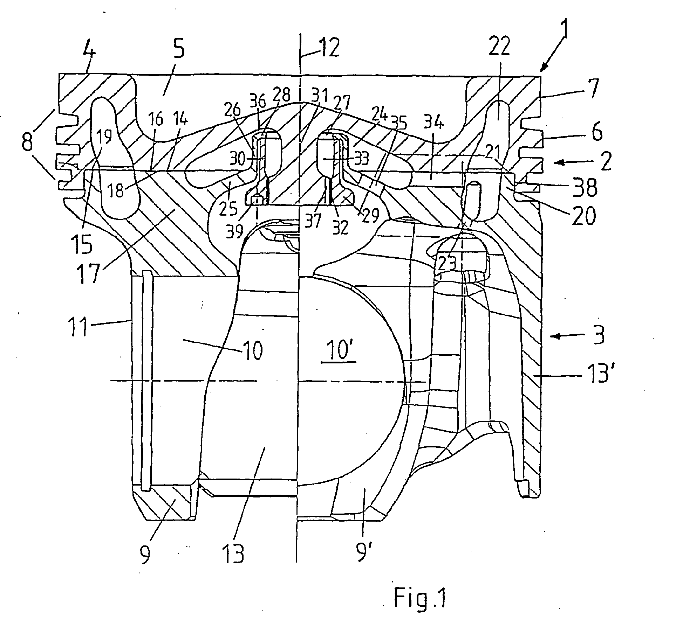

In Fig. 1 ist ein zweiteiliger, gekühlter Kolben 1 dargestellt, der aus einem Oberteil 2 und einem Unterteil 3 besteht. Das Oberteil 2 und das Unterteil 3 können aus Stahl oder aus einem anderen metallischen Werkstoff gefertigt sein. Ein Kolbenboden 4 begrenzt die axiale Oberseite des Oberteils 2, dessen radial innerer Bereich eine Verbrennungsmulde 5 aufweist. An den Außenrand des Kolbenbodens 4 ist eine Ringwand 6 angeformt, deren Außenfläche kolbenbodenseitig einen Feuersteg 7 bildet, woran sich schaftseitig eine Ringpartie 8 mit Ringnuten zur Aufnahme von in der Figur nicht dargestellten Kolbenringen anschließt.

An der dem Kolbenboden 4 abgewandten Unterseite des Unterteils 3 sind zwei Bolzennaben 9, 9' mit je einer Bolzenbohrung 10, 10' angeordnet, deren Stirnseiten 11 gegenüber der Ringwand 6 in Richtung Kolbenachse 12 zurückgesetzt angeordnet sind. Die Bolzennaben 9, 9' sind über Kolbenschaftelemente 13, 13' miteinander verbunden.

Das Oberteil 2 und das Unterteil 3 des Kolbens 1 stehen über eine innere Auflage 14 und über eine konzentrisch dazu angeordnete, äußere Auflage 15 miteinander in Verbindung. Die innere Auflage 14 wird von einer auf der der Verbrennungsmulde 5 abgewandten Seite des Oberteils 2 angeordneten Auflagefläche 16 und von einer kolbenbodenseitig auf einer ringförmigen Tragrippe 17 des Unterteils 3 angeordneten Auflagefläche 18 gebildet. Die äußere Auflage 15 wird von einer die Unterseite der Ringwand 6 begrenzenden Auflagefläche 19 und von einer kolbenbodenseitig auf einem ringförmigen Tragsteg 20 des Unterteils 3 angeordneten Auflagefläche 21 gebildet.

Vom Oberteil 2 und vom Unterteil 3 des Kolbens 1 wird ein im kolbenbodenseitigen Randbereich des Kolbens 1 angeordneter Kühlkanal 22 gebildet, dessen radial äußere Begrenzung von der Ringwand 6, dessen radial innere Begrenzung teils von der Tragrippe 17 und teils vom Kolbenboden 4, und dessen axial untere Begrenzung vom Unterteil 3 des Kolbens 1 gebildet werden. Über Einlassöffnungen 23 wird Kühlöl in den Kühlkanal 22 eingeleitet.

Der Kolben 1 weist einen weiteren, koaxial zur Kolbenachse 12 angeordneten, ringförmigen Kühlkanal 24 auf, der einen geringeren radialen Durchmesser als der äußere Kühlkanal 22 hat und in radialer Richtung gesehen innerhalb des äußeren Kühlkanals 22 angeordnet ist. Axial oben wird der innere Kühlkanals 24 vom Kolbenboden 4, radial außen von der Tragrippe 17 und radial unten von einem dünnwandig und elastisch nachgiebig ausgebildeten, oberen Bodenteil 25 des Unterteils 3 begrenzt, an das radial innen eine nach axial oben gerichtete Dehnhülse 26 angeformt ist, deren axial oben liegende Öffnung 27 mit einem insoweit nach radial innen gerichteten Kragen 28 versehen ist, dass die Unterseite des Kragens 28 als Anschlag für eine an eine Mutter 29 angeformte Stauchhülse 30 dienen kann. Hierbei bildet die Dehnhülse 26 die radial innere Begrenzung des inneren Kühlkanals 24.

Koaxial zur Kolbenachse 12 ist auf der Unterseite des Kolbenbodens 4 ein zylindrischer Bolzen 31 mit einer Mantelfläche angeformt, die einen kolbenbodenabgewandten Endbereich mit einem Außengewinde 32 aufweist, das dem Innengewinde der Mutter 29 entspricht, sodass die Mutter 29 auf das Außengewinde 32 aufschraubbar ist. Die axiale Länge des Bolzens 31 entspricht näherungsweise der axialen Länge der mit der Stauchhülse 30 versehenen Mutter 29. Der radial Durchmesser des Bolzens 31 und insb. dessen Außengewindes 32 sind etwas geringer als der radiale Durchmesser der Öffnung 27 der Dehnhülse 26, sodass der Bolzen 31 problemlos in die Öffnung 27 einführbar ist. Der radiale Innendurchmesser der Stauchhülse 30 ist etwas größer als der radiale Außendurchmesser des Außengewindes 32 des Bolzens 31.

Im vorliegenden Ausführungsbeispiel ist der radiale Durchmesser des Bolzens 31 in einem Bereich zwischen dessem Außengewinde 32 und der Unterseite des Kolbenbodens 4 geringer ausgebildet als der Durchmesser des Außengewindes 32 und auch geringer als der Innendurchmesser der Stauchhülse 30, sodass sich zwischen der Stauchhülse 30 und dem Bolzen 31 ein ringförmiger Kühlraum 33 ergibt.

Über die Einlassöffnung 23 wird Kühlöl in den äußeren Kühlkanal 22 eingeleitet, das über einen Verbindungskanal 34 in den inneren Kühlkanal 24 fließt, von wo ein Teil des Öles über eine Öffnung 35 im oberen Bodenteil 25 des Unterteils 3 wieder zurück in das Kurbelgehäuse fließt. Ein kleiner Teil des Öles fließt über einen Spalt 36 zwischen dem Kragen 28 und der Unterfläche des Kolbenbodens 4 und über die Öffnung 27 der Dehnhülse 26 in den Kühlraum 33, von wo es über in das Außengewinde 32 des Bolzens 31 eingearbeitete und parallel zur Kolbenachse 12 liegende Ablaufkanäle zurück in das Kurbelgehäuse fließt, von denen in Fig. 1 ein Ablaufkanal 37 dargestellt ist. Dies bewirkt eine sehr gute Kühlung des thermisch hoch belasteten Oberteiles 2 des Kolbens 1.

Beim Zusammenbau von Oberteil 2 und Unterteil 3 des Kolbens 1 wird zunächst der auf der Unterseite des Kolbenbodens 4 angeordnete Bolzen 31 durch die Öffnung 27 der Dehnhülse 26 geführt, die an das obere Bodenteil 25 des Kolbenunterteiles 3 angeformt ist. Im weiteren Verlauf der Montage des Kolbens 1 werden das Oberteil 2 und das Unterteil 3 des Kolbens 1 koaxial zueinander ausgerichtet, was dadurch erreicht wird, dass der Tragsteg 20 im Schnitt die Form einer nach radial innen und axial in Richtung des Kolbenbodens 4 gerichteten Stufe aufweist, und dass die untere Stirnseite der Ringwand 6 auf der Innenseite eine zylinderförmige Ausnehmung 38 aufweist, deren Innenform der Außenform des Tragsteges 20 entspricht, sodass bei der Montage von Ober- und Unterteil 2, 3 des Kolbens 1 der Tragsteg 20 in die Ausnehmung 38 eingeführt wird, und damit Oberteil 2 und Unterteil 3 koaxial ausgerichtet werden.

Im Anschluss daran wird die Stauchhülse 30 der Mutter 29 über das Außengewinde 32 des Bolzens 31 geschoben, bis das Innengewinde der Mutter 29 in Kontakt mit dem Außengewinde 32 des Bolzens 31 kommt. Die Mutter 29 wird nun insoweit auf das Außengewinde 32 aufgeschraubt, bis die obere Stirnseite der Stauchhülse 30 in Anlage an den Kragen 28 der Dehnhülse 26 gelangt.

Ein weiteres Festschrauben der Mutter 29 unter Auffwendung eines gewissen Drehmomentes bewirkt nun, dass sich das elastisch nachgiebige, obere Bodenteil 25 tellerfederartig in Richtung Kolbenboden 4 verformt, dass sich die dünnwandig ausgebildete Dehnhülse 26 axial dehnt, dass die ebenfalls dünnwandig ausgebildete Stauchhülse 30 axial zusammengestaucht wird, dass der mittlere Teil des Bolzens 31 mit reduziertem radialem Durchmesser eine Dehung erfährt, und dass sich der die Verbrennungsmulde 5 begrenzende Teil des Kolbenbodens 4 tellerfederartig in Schaftrichtung verformt. Diese elastische Verformung der Kolbenteile 25, 26, 30, 31 und 4 bewirkt eine sehr flache Kennlinie der Schraubverbindung zwischen Mutter 29 und Bolzen 31, die dieser Schraubverbindung unabhängig von Temperatureinflüssen und von mechanischen Einflüssen auf den Kolben 1 eine große Festigkeit verleiht.

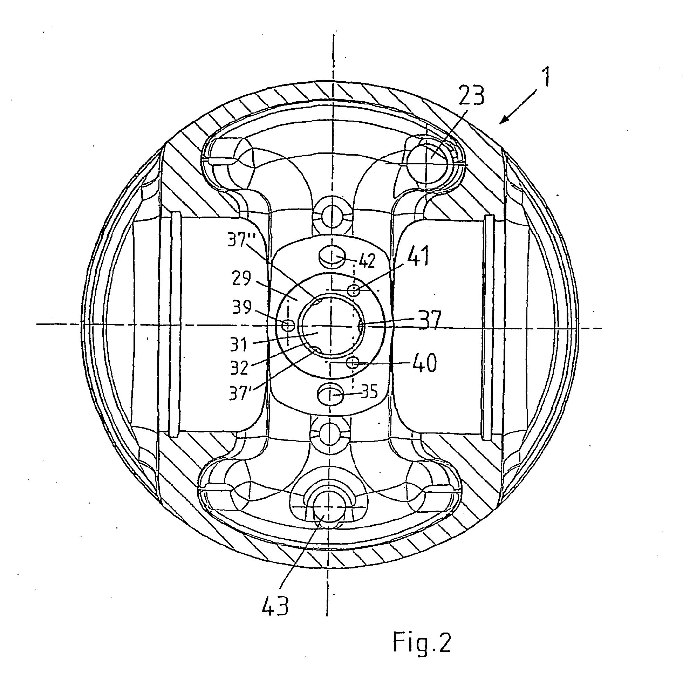

Die Mutter 29 kann als Sechskantmutter ausgebildet sein. Vorteile bei der Montage des Kolbens 1 ergeben sich aber, wenn die Mutter 29, wie es in Fig. 1 angedeutet und in Fig. 2 gut dargestellt ist, auf der kolbenbodenabgewanden Stirnseite Bohrungen 39, 40 und 41 aufweist. Dadurch ist es möglich, die Mutter 29 mit Hilfe eines Schraubenschlüssels festzuschrauben, der die Form eines schmalen Zylinders mit annähernd dem gleichen radialen Durchmesser wie die Mutter 29 hat, und auf dessen einer Stirnseite Bolzen angebracht sind, die den gleichen Abstand voneinander wie die Bohrungen 39, 40, 41 haben, und die zudem deren komplementäre Form aufweisen. Mit einem derart ausgebildeten Schraubenschlüssen kann ein sehr großes Drehmoment auf die Mutter 29 übertragen werden. Zudem weist dieser Schraubenschlüssels einen relativ kleinen radialen Durchmesser auf, sodass er sehr gut zum Festschrauben der relativ schwer zugänglichen Mutter 29 verwendbar ist.

In der Unteransicht des Kolbens 1 gemäß Fig. 2 ist die Öffnung 35 und eine weitere Öffnung 42 zum Ausleiten des im inneren Kühlkanals 24 befindlichen Öles dargestellt. Weiterhin sind in Fig. 2 die Einlassöffnung 23 und eine Auslassöffnung 43 des äußeren Kühlkanals 22 zu erkennen, die dem Zu- bzw. Abführen des Kühlöls dienen. Gut erkennbar sind in Fig. 2 außerdem die drei in das Außengewinde 32 des Bolzens 31 eingeformten Ablaufkanäle 37, 37', 37", die dem Ausleiten des im Kühlraum 33 zwischen dem Bolzen 31 und der Stauchhülse 30 angesammelten Öles dienen.

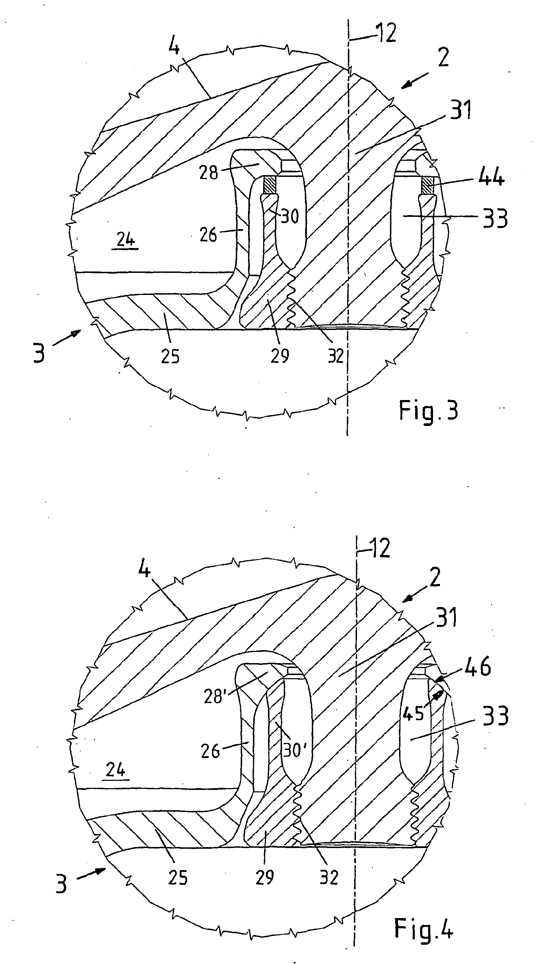

Fig. 3 zeigt eine Ausgestaltung der erfindungsgemäßen Verschraubung des Kolbenoberteils 2 mit dem Kolbenunterteil 3, bei der zwischen dem kolbenbodenseitig an die Dehnhülse 26 angeformten und nach radial innen gerichteten Kragen 28 und der Stauchhülse 30 eine Unterlegscheibe 44 angeordnet ist. Die Unterlegscheibe 44 bewirkt, dass davon die Flächenpressung, die im verschraubten Zustand von der Stauchhülse 30 auf den Kragen 28 ausgeübt wird, gleichmäßiger über den gesamten Umfang des Kontaktbereiches zwischen Kragen 28 und Stauchhülse 30 verteilt wird.

Gemäß Fig. 4 sind die miteinander in Kontakt stehenden Flächen 45 des Kragens 28' und 46 der Stauchhülse 30' in Richtung Kolbenboden 4 konisch auf die Kolbenachse 12 zulaufend ausgebildet. Die Flächen 45 und 46 können auch ballig ausgebildet sein und in Richtung Kolbenboden 4 auf die Kolbenachse 12 zulaufen. Bewirkt wird hierdurch eine Verringerung der im verschraubten Zustand in der Dehnhülse 26, im Kragen 28' und in der Stauchhülse 30' herrschenden Materialspannung. Zudem kann zwischen den Flächen 45 und 46 eine Unterlegscheibe angeordnet sein, wodurch der zusätzliche Vorteil einer Vergleichmäßigung der von der Stauchhülse 30 auf den Kragen 28 ausgeübten Flächenpressung erreicht wird.

### Bezugszeichenliste

- 1: Kolben
- 2: Oberteil
- 3: Unterteil
- 4: Kolbenboden
- 5: Verbrennungsmulde
- 6: Ringwand
- 7: Feuersteg
- 8: Ringpartie
- 9, 9': Bolzennabe
- 10, 10': Bolzenbohrung
- 11: Stirnseite der Bolzennabe 9, 9'
- 12: Kolbenachse
- 13, 13': Kolbenschaftelement
- 14: innere Auflage
- 15: äußere Auflage
- 16: Auflagefläche des Oberteils 2
- 17: Tragrippe des Unterteiles 3
- 18: Auflagefläche des Unterteiles 3
- 19: Auflagefläche
- 20: Tragsteg
- 21: Auflagefläche
- 22: äußerer Kühlkanal
- 23: Einlassöffnung
- 24: innerer Kühlkanal
- 25: obereres Bodenteil des Unterteiles 3
- 26: Dehnhülse
- 27: Öffnung
- 28, 28': Kragen
- 29: Mutter
- 30, 30': Stauchhülse
- 31: Bolzen
- 32: Außengewinde
- 33: Kühlraum
- 34: Verbindungskanal, Ölzulauföffnung
- 35: Öffnung, Ölablauföffnung
- 36: Spalt
- 37, 37',37": Ablaufkanal
- 38: zylinderförmige Ausnehmung
- 39, 40, 41: Bohrung
- 42: Öffnung
- 43: Auslassöffnung
- 44: Unterlegscheibe
- 45: mit der Stauchhülse 30' in Kontakt stehende Fläche des Kragens 28'
- 46: mit dem Kragen 28' in Kontakt stehende Fläche der Stauchhülse 30'

## Patentansprüche

1. Zweiteiliger Kolben (1) für einen Verbrennungsmotor
- mit einem Oberteil (2), das einen Kolbenboden (4) bildet, und auf dessen dem Kolbenboden (4) abgewandter Unterseite ein koaxial zur Kolbenachse (12) liegender, zylindrischer Bolzen (31) mit einem Außengewinde (32) angeordnet ist,
- mit einem Unterteil (3), auf dessen Unterseite Bolzennaben (9, 9') mit Bolzenbohrungen (10, 10') und die Bolzennaben (9, 9') miteinander verbindende Schaftelemente (13, 13') angeordnet sind,
- wobei das Unterteil (3) kolbenbodenseitig eine koaxial zur Kolbenachse (12) liegende Öffnung (27) aufweist, in die der Bolzen (31) eingeführt ist, und
- wobei das Oberteil (2) und das Unterteil (3) mittels einer auf das Außengewinde (32) des Bolzens (31) aufgeschraubten Mutter (29) miteinander verbunden sind,
- wobei die Öffnung (27) mit einem nach radial innen gerichteten Kragen (28) versehen ist,
- und dass an die Mutter (29) kolbenbodenseitig eine koaxial zur Kolbenachse (12) liegende, in axialer Richtung elastischen Stauchhülse (30) angeformt ist, die kolbenbodenseitig an dem Kragen (28) anliegt.
**dadurch gekennzeichnet,**
- **dass** das Unterteil (3) ein elastisch nachgiebiges, oberes Bodenteil (25) aufweist, das einen koaxial zur Kolbenachse (12) angeordneten, geschlossenen, ringförmigen Kühlkanal (24) mit Ölzu- und Ölablauföffnungen (34, 35) schaftseitig begrenzt, der kolbenbodenseitig vom Oberteil (2) begrenzt ist,
- wobei an das Bodenteil (25) radial innen eine koaxial zur Kolbenachse (12) angordnete, nach oben gerichtete, in axialer Richtung elastische Dehnhülse (26) angeformt ist, die die radial innere Begrenzung des Kühlkanals (24) bildet, und die an ihrem kolbenbodenseitigen Ende die Öffnung (27) aufweist.

2. Kolben nach Anspruch 1, **dadurch gekennzeichnet, dass** das Außengewinde (32) auf einem kolbenbodenabgewandten Endbereich der Mantelfläche des Bolzens (31) angebracht ist, und dass der Bereich des Bolzens (31 zwischen dem Außengewinde (32) und dem Kolbenboden (4) einen geringeren radialen Durchmesser als das Außengewinde (32) aufweist.

3. Kolben nach Anspruch 1 oder 2, **dadurch gekennzeichnet, dass** die Mutter (29) auf der Unterseite mindestens zwei Bohrungen (39, 40, 41) aufweist, in die auf einer Stirnseite eines im Wesentlichen zylinderförmigen Schraubenschlüssels angeordnete Bolzen passen.

4. Kolben nach einem der Ansprüche 1 bis 3, **dadurch gekennzeichnet, dass** in das Außengewinde (32) des Bolzens (31) mindestens ein Ablaufkanal (37, 37', 37") zum Ausleiten des in einem Kühlraum (33) zwischen dem Bolzen (31) und der Stauchhülse (30) befindlichen Öles eingeformt ist.

5. Kolben nach einem der Ansprüche 1 bis 4, **dadurch gekennzeichnet, dass** zwischen der Stauchhülse (30) und dem Kragen (28) eine Unterlegscheibe (44) angeordnet ist.

6. Kolben nach einem der Ansprüche 1 bis 4, **dadurch gekennzeichnet, dass** die mit der Stauchhülse (30') in Kontakt stehende Fläche (45) des Kragens (28') und die mit dem Kragen (28') in Kontakt stehende Fläche (46) der Stauchhülse (30') in Richtung Kolbenboden (4) auf die Kolbenachse (12) zulaufend ausgebildet sind.

7. Kolben nach einem der Ansprüche 1 bis 4, **dadurch gekennzeichnet, dass** die mit der Stauchhülse (30') in Kontakt stehende Fläche (45) des Kragens (28') und die mit dem Kragen (28') in Kontakt stehende Fläche (46) der Stauchhülse (30') in Richtung Kolbenboden (4) auf die Kolbenachse (12) konisch zulaufend ausgebildet sind.

8. Kolben nach einem der Ansprüche 1 bis 4, **dadurch gekennzeichnet, dass** die mit der Stauchhülse (30') in Kontakt stehende Fläche (45) des Kragens (28') und die mit dem Kragen (28') in Kontakt stehende Fläche (46) der Stauchhülse (30') eine ballige Form aufweisen und in Richtung Kolbenboden (4) auf die Kolbenachse (12) zulaufend ausgebildet sind.

9. Kolben nach einem der Ansprüche 6 bis 8, **dadurch gekennzeichnet, dass** zwischen der Fläche (45) des Kragens (28') und der Fläche (46) der Stauchhülse (30') eine Unterlegscheibe (44) angeordnet ist.

## Claims

1. A two-part piston (1) for an internal combustion engine,
- having an upper part (2) forming the piston head (4), and with a cylindrical bolt (31) having an external thread (32) being arranged coaxially in reference to the piston axis (12) on its bottom facing away from the piston head (4),
- having a lower part (3), with bolt hubs (9, 9') having bolt bores (10, 10') and shaft elements (13, 13') connecting the bolt hubs (9, 9') to each other being arranged on its bottom,
- wherein the lower part (3) comprises an opening (27), which is located on the side of the piston head and is positioned coaxially in reference to the piston axis (12) and into which the bolt (31) is inserted,
- wherein the upper part (2) and the lower part (3) are connected to each other via a nut (29) screwed upon the bolt (31) via the external thread (32) of the bolt (31),
- wherein the opening (27) comprises a collar (28) facing radially inwards,
- and that a compression sleeve (30), elastic in the axial direction, is integrally formed at the nut (29), at the side of the piston head (12), and is positioned coaxially in reference to the piston axis (12) and contacts the collar (28) at the side of the piston head.
**characterized in that**
- the lower part (3) comprises an elastic, ductile upper head part (25) which, at the side of the shaft, limits a closed annular cooling channel (24) which is arranged coaxially in reference to the piston axis (12) and has oil inlet and oil outlet openings (34, 35), said cooling channel being limited on the side of the piston head by the upper part (2),
- wherein an extension sleeve (26), elastic in the axial direction, is integrally formed on the head part (25) and is arranged radially inwardly and coaxial in reference to the piston axis (12) and faces upwards and forms the radially interior limit of the cooling channel (24) and comprises the opening (27) at its end at the side of the piston head,

2. A piston according to claim 1, **characterized in that** the external thread (32) is arranged on the jacket area of the bolt (31) at the end section facing away from the piston head, and that the area of the bolt (31) between the external thread (32) and the piston head (4) shows a radial diameter smaller than the exterior thread (32).

3. A piston according to claim 1 or 2, **characterized in that** the bottom of the nut (29) comprises at least two bores (39, 40, 41), into which there fits a bolt which is arranged on a face of an essentially cylindrical wrench.

4. A piston according to one of claims 1 through 3, **characterized in that** at least one outlet channel (37, 37', 37") for discharging any oil located in a cooling chamber (33) between the bolt (31) and the compression sleeve (30) is formed in the external thread (32) of the bolt (31).

5. A piston according to one of claims 1 through 4, **characterized in that** a washer (44) is arranged between the compression sleeve (30) and the collar (28).

6. A piston according to one of claims 1 through 4, **characterized in that** the area (45) of the collar (28'), contacting the compression sleeve (30') and the area (46) of the extension sleeve (30') contacting the collar (28') are embodied tapering towards the piston axis (12) in the direction of the piston head (4).

7. A piston according to one of claims 1 through 4, **characterized in that** the area (45) of the collar (28') contacting the compression sleeve (30') and the area (46) of the compression sleeve (30') contacting the collar (28') are embodied conically tapering towards the piston axis (12) in the direction towards the piston head (4).

8. A piston according to one of claims 1 through 4, **characterized in that** the area (45) of the collar (28') contacting the compression sleeve (30') and the area (46) of the compression sleeve (30') contacting the collar (28') show a spherical shape and are embodied tapering towards the piston axis (12) in the direction of the piston head (4).

9. A piston according to one of claims 6 through 8, **characterized in that** a washer (44) is arranged between the area (45) of the collar (28') and the area (46) of the compression sleeve (30').

## Revendications

1. Piston en deux parties (1) pour un moteur à combustion interne
- comprenant une partie supérieure (2), qui forme un fond de piston (4) et sur la face inférieure, opposée au fond de piston (4), de laquelle est agencé un axe cylindrique (31) situé coaxialement par rapport à l'axe de piston (12) et possédant un filetage extérieur (32),
- comprenant une partie inférieure (3), sur la face inférieure de laquelle sont agencés des moyeux d'axe (9, 9') comprenant des alésages d'axe (10, 10') et des éléments de tige (13, 13') reliant ensemble les moyeux d'axe (9, 9'),
- la partie inférieure (3) présentant côté fond de piston une ouverture (27) située coaxialement par rapport à l'axe de piston (12), dans laquelle l'axe (31) est inséré, et
- la partie supérieure (2) et la partie inférieure (3) étant reliées ensemble au moyen d'un écrou (29) vissé sur le filetage extérieur (32) de l'axe (31),
- l'ouverture (27) étant munie d'un collet (28) orienté radialement vers l'intérieur,
- et une douille compressible (30) élastique en direction axiale, située coaxialement par rapport à l'axe de piston (12) et qui repose sur le collet (28) côté fond de piston, étant formée au niveau de l'écrou (29) côté fond de piston,
**caractérisé en ce que**
- la partie inférieure (3) présente une partie supérieure de fond (25) élastiquement déformable, qui délimite côté tige un canal de refroidissement (24) annulaire, fermé, agencé coaxialement par rapport à l'axe de piston (12), comprenant des ouvertures (34, 35) d'alimentation et d'évacuation d'huile qui sont délimitées côté fond de piston par la partie supérieure (2),
- une douille d'allongement (26) élastique en direction axiale, orientée vers le haut, agencée coaxialement par rapport à l'axe de piston (12), qui forme la limite radialement intérieure du canal de refroidissement (24) et qui présente une ouverture (27) au niveau de son extrémité côté fond de piston, étant formée radialement vers l'intérieur au niveau de la partie de fond (25).

2. Piston selon la revendication 1, **caractérisé en ce que** le filetage extérieur (32) est mis en place sur une zone d'extrémité, opposé au fond de piston, de la surface d'enveloppe de l'axe (31), et la zone de l'axe (31) compris entre le filetage extérieur (32) et le fond de piston (4) présente un diamètre radial inférieur à celui du filetage extérieur (32).

3. Piston selon la revendication 1 ou 2, **caractérisé en ce que** l'écrou (29) présente sur la face inférieure au moins deux alésages (39, 40, 41), dans lesquels s'adaptent des axes agencés sur une face frontale d'une clé de serrage de forme essentiellement cylindrique.

4. Piston selon l'une quelconque des revendications 1 à 3, **caractérisé en ce qu'**au moins un canal d'évacuation (37, 37', 37"), destiné à l'élimination de l'huile se trouvant dans une chambre de refroidissement (33) entre l'axe (31) et la douille compressible (30) est formé dans le filetage extérieur (32) de l'axe (31).

5. Piston selon l'une quelconque des revendications 1 à 4, **caractérisé en ce qu'**une rondelle (44) est agencée entre la douille compressible (30) et le collet (28).

6. Piston selon l'une quelconque des revendications 1 à 4, **caractérisé en ce que** la surface (45) du collet (28') se trouvant en contact avec la douille compressible (30') et la surface (46) de la douille compressible (30') se trouvant en contact avec le collet (28') sont réalisées de manière à rejoindre l'axe de piston (12) en direction du fond de piston (4).

7. Piston selon l'une quelconque des revendications 1 à 4, **caractérisé en ce que** la surface (45) du collet (28') se trouvant en contact avec la douille compressible (30') et la surface (46) de la douille compressible (30') se trouvant en contact avec le collet (28') sont réalisées de manière à rejoindre sous une forme conique l'axe de piston (12) en direction du fond de piston (4).

8. Piston selon l'une quelconque des revendications 1 à 4, **caractérisé en ce que** la surface (45) du collet (28') se trouvant en contact avec la douille compressible (30') et la surface (46) de la douille compressible (30') se trouvant en contact avec le collet (28') présentent une forme bombée et sont réalisées de manière à rejoindre l'axe de piston (12) en direction du fond de piston (4).

9. Piston selon l'une quelconque des revendications 6 à 8, **caractérisé en ce qu'**une rondelle (44) est agencée entre la surface (45) du collet (28') et la surface (46) de la douille compressible (30').
